Europäisches Patentamt

(19) European Patent Office

Office européen des brevets

(11) Numéro de publication : **0 060 764**
**B1**

(12) **FASCICULE DE BREVET EUROPÉEN**

(45) Date de publication du fascicule du brevet :
05.06.85

(51) Int. Cl.⁴ : **A 23 C 11/02, A 23 C  9/152**

(21) Numéro de dépôt : 82400399.0

(22) Date de dépôt : 08.03.82

(54) **Poudre de lait pour alimentation animale.**

(30) Priorité : 17.03.81 FR 8105276

(43) Date de publication de la demande :
22.09.82 Bulletin 82/38

(45) Mention de la délivrance du brevet :
05.06.85 Bulletin 85/23

(84) Etats contractants désignés :
AT BE CH DE GB IT LI LU NL SE

(56) Documents cités :
EP-A- 0 008 908
CH-A-    486 209
DE-C-    853 250
FR-A- 2 397 162
US-A- 2 064 110
US-A- 4 219 583
FOOD TECHNOLOGY, vol. 7, juillet 1953, (US) M.A.
LEWIS et al.: "Stable Foams from Food Proteins with
Polyphosphates" pages 261-264

(73) Titulaire : SANDERS
17 quai de l'Industrie
F-91200 Athis-Mons (FR)

(72) Inventeur : Assoumani, Mohamed
11 Les Avelines
F-91440 Les Ulis (FR)

(74) Mandataire : Lepeudry-Gautherat, Thérèse et al
CABINET ARMENGAUD JEUNE CASANOVA et
LEPEUDRY
23 boulevard de Strasbourg
F-75010 Paris (FR)

Jouve, 18, rue St-Denis, 75001 Paris, France

## 0 060 764

**Description**

La présente invention concerne une poudre de lait pour réaliser un lait reconstitué notamment pour jeunes animaux tels que des veaux, dont la durée de conservation est notamment plus longue que pour ceux actuellement commercialisés.

Comme les élevages bovins laitiers sont exclusivement tournés vers la production et la commercialisation du lait, et comme il est néanmoins nécessaire dans les élevages bovins à viande de compléter l'alimentation lactée du jeune, on utilise de plus en plus des laits reconstitués se présentant sous forme d'une poudre dans laquelle certains éléments nobles du lait ont été remplacés. Bien que cela puisse paraître paradoxal, l'utilisation de tels laits augmente la rentabilité économique des élevages.

Des formules de lait reconstitué sont notamment décrites dans les documents DE-C-853 250 et EP-A-0 008 908.

Dans le premier de ces documents, est révélé un procédé pour fabriquer un concentré de lait ou une poudre de lait soluble destiné à la consommation humaine, selon lequel on peut ajouter 1 % en poids d'acide phosphorique par rapport au poids des matières azotées du lait. Ce procédé a pour but de conserver les qualités organoleptiques du lait en évitant la dénaturation des albumines et la coagulation de la caséine. Le lait reconstitué à partir du concentré ainsi préparé est immédiatement consommé : il n'existe donc aucun risque de fermentation.

Quant au second document, il concerne une poudre de lait destiné à l'alimentation des jeunes animaux. Celle-ci contient notamment un régulateur de pH tel qu'un propionate, un acide comestible tel que l'acide malique, et moins de 10 % en poids de caséine, de telle sorte que le pH du lait reconstitué est compris entre 6 et 5,2, immédiatement après la reconstitution du lait. Ce document ne fournit aucune indication quant à la formulation de lait reconstitué contenant plus de 10 % de caséine. De plus la fonction d'un additif est déterminée et sans action sur un autre additif.

A chaque repas, l'éleveur doit délayer une quantité de poudre de lait qui est déterminée en fonction des performances du jeune et de son âge, le plus souvent dans une eau relativement chaude, c'est-à-dire dont la température est aux alentours de 50 °C ; si le jeune ne consomme pas tout immédiatement, l'éleveur doit jeter le résidu car les qualités organoleptiques du lait et sa composition évoluent très rapidement de façon à le rendre impropre à toute consommation. En effet, le lait est notamment un excellent milieu de culture.

Certes, il a déjà été imaginé des systèmes permettant à l'éleveur de ne pas préparer le lait à chaque repas. Par exemple, il existe un appareil préparant automatiquement le lait au fur et à mesure des besoins, les jeunes venant s'alimenter à volonté.

Aussi un but de la présente invention est-il de fournir une poudre de lait qui, une fois mise en solution dans l'eau, permet de réaliser un lait reconstitué dont les qualités organoleptiques et bactériologiques sont maintenues satisfaisantes pendant une assez longue durée, et qui peut donc être consommé même froid.

Un objet de l'invention est une poudre de lait qui peut être éventuellement délayée dans de l'eau froide.

Ce but et cet objet, ainsi que d'autres qui apparaîtront par la suite, sont atteints par une poudre de lait selon la présente invention, qui comprend comme additif un mélange constitué d'environ 40 à 85 % en poids d'acide citrique et d'environ 15 à 60 % en poids d'un hexamétaphosphate alcalin.

La poudre de lait comprend de 0,8 à 2 % en poids de cet additif, et de préférence de 1 à 1,5 % en poids.

Avantageusement, la composition de cet additif est d'environ 70 % en poids d'acide citrique et environ 30 % en poids d'un hexamétaphosphate alcalin.

De préférence, l'hexamétaphosphate alcalin est l'hexamétaphosphate de sodium.

Selon un autre mode de réalisation de l'invention, cet additif comporte en outre de la carboxyméthylcellulose.

Dans ce cas, l'additif comprend environ 40 à 60 % en poids de carboxyméthylcellulose, et de préférence environ 50 % en poids.

Avantageusement, cet additif est constitué d'environ 40 % en poids d'acide citrique, d'environ 40 % en poids de carboxyméthylcellulose et d'environ 20 % en poids d'un hexamétaphosphate.

La poudre de lait obtenue selon la présente invention peut être mise en solution dans une eau tiède ou même froide ; dans le cas où l'additif comprend de la carboxyméthylcellulose, cette mise en solution est de préférence réalisée dans une eau tiède.

Le lait reconstitué à partir de cette poudre peut être laissé à la disposition des animaux pendant au moins 72 heures, soit trois jours, sans qu'aucun trouble physiologique n'apparaisse chez le jeune : ceci est la traduction d'une bonne conservation de ce lait à la température ambiante et à l'air libre.

Les exemples ci-dessous permettent à l'homme du métier de mieux comprendre les avantages d'une poudre de lait selon la présente invention.

### Exemple 1

On dilue dans une eau froide une poudre de lait commercialisée sous la marque CREMO à laquelle a

2

**0 060 764**

été ajouté un additif comprenant 70 % en poids d'acide citrique et 30 % en poids d'hexamétaphosphate de sodium. Dans la poudre de lait, la concentration de cet additif est de 1,4 % en poids.

Le lait reconstitué obtenu après cette dilution a une concentration d'environ 125 de matière sèche/litre de lait.

On a laissé évoluer ce lait reconstitué à l'air libre et à la température ambiante. On a mesuré le pH sur une période supérieure à trois jours ; les résultats sont regroupés dans le tableau I ci-dessous :

Tableau I

| Temps en heure | 0 | 25 | 49 | 73 | 78 |
|---|---|---|---|---|---|
| pH | 6,4 | 6,2 | 5,7 | 5,3 | 5,2 |

Le résultat surprenant de cette expérience est qu'aucune floculation n'a été observée. Par contre, sur des laits reconstitués traditionnels ou acides sans caséine, une coagulation a eu lieu environ 50 heures après leur préparation.

Exemple 2

On dilue dans de l'eau froide la même poudre de lait qu'à l'exemple précédent, mais l'additif comprend 30 % en poids d'acide citrique, 50 % en poids de carboxyméthylcellulose et 20 % en poids d'hexamétaphosphate de sodium. Dans la poudre de lait, la concentration en cet additif est de 1,2 % en poids.

Le lait reconstitué obtenu après dilution a une concentration d'environ 100 g de matière sèche/litre en lait.

On a laissé évoluer ce lait reconstitué à l'air libre et à la température ambiante. On en a mesuré le pH et l'acidité sur une période supérieure à trois jours ; les résultats sont regroupés dans le tableau II ci-dessous :

Tableau II

| Temps en heure | 0 | 6 | 24 | 30 | 48 | 54 | 72 | 78 |
|---|---|---|---|---|---|---|---|---|
| pH | 6,5 | 6,5 | 6,3 | 5,9 | 5,2 | 5,1 | 4,8 | 4,5 |
| Acidité | 2,5 | 3,0 | 3,5 | 4,5 | 8,1 | 9,0 | 10,2 | 11,2 |

Le pH a été mesuré au pH-mètre ; il indique comment évoluent les fermentations dues à la flore bactérienne contenue dans le lait.

L'acidité qui est mesuré selon la méthode DORNIC, traduit les qualités organoleptiques du lait et, par là-même, l'action des micro-organismes sur les composants fermentescibles du lait.

Tout comme dans l'exemple précédent, on a été surpris d'observer qu'aucune floculation ne se produisait, c'est-à-dire qu'aucun caillé ne se formait dans les trois jours suivant la préparation du lait reconstitué. Dans le cas d'un lait reconstitué selon la formule de l'exemple 1, la floculation avait même lieu au-delà de 96 heures après la préparation.

Les veaux de boucherie auxquels ces laits reconstitués ont été distribués, en ont consommé entre 13 et 15 litres par jour. Cette consommation est du même ordre de grandeur que celle avec du lait reconstitué usuel, et peut être même un peu supérieur.

On peut également noter que la dilution d'une poudre de lait comprenant un additif selon la présente invention a lieu dans une eau soit froide soit dans une eau tiède, mais de toute façon dans une eau dont la température est nettement inférieure à celle actuellement préconisée (généralement aux alentours de 45-50 °C).

**Revendications**

1. Poudre de lait notamment pour l'alimentation animale, caractérisée par le fait qu'elle comprend en plus des éléments nutritionnels, de 0,8 à 2 % en poids d'un additif, mélange constitué d'environ 40 à 85 % en poids d'acide citrique et d'environ 15 à 60 % en poids d'un hexamétaphosphate alcalin.

3

2. Poudre de lait selon la revendication 1, caractérisée par le fait qu'elle comprend de 1 à 1,5 % en poids dudit additif.

3. Poudre de lait selon la revendication 1, caractérisée en ce que ledit additif comprend environ 70 % en poids d'acide citrique et environ 30 % en poids d'hexamétaphosphate alcalin.

4. Poudre de lait selon l'une quelconque des revendications 1 à 3, caractérisée en ce que ledit additif comprend en outre de la carboxyméthylcellulose.

5. Poudre de lait selon la revendication 4, caractérisée en ce que ledit additif comporte environ de 40 à 60 % en poids de carboxyméthylcellulose.

6. Poudre de lait selon l'une quelconque des revendications 1 à 5, caractérisée en ce que ledit additif comprend environ 40 % en poids d'acide citrique, environ 40 % en poids de carboxyméthylcellulose et environ 20 % en poids d'un hexamétaphosphate alcalin.

7. Poudre de lait selon l'une quelconque des revendications 1 à 6, caractérisée en ce que ledit hexamétaphosphate alcalin est l'hexamétaphosphate de sodium.

## Claims

1. Milk powder for feeding animals, characterized in that it comprises, in addition to the nutritional elements, from 0.8 to 2 % by weight of an additive, mixture constituted by about 40 to 85 % by weight of citric acid and about 15 to 60 % by weight of an alkaline hexametaphosphate.

2. Milk powder according to Claim 1, characterized in that it comprises from 1 to 1.5 % by weight of said additive.

3. Milk powder according to Claim 1, characterized in that said additive comprises about 70 % by weight of citric acid and about 30 % by weight of alkaline hexametaphosphate.

4. Milk powder according to any one of Claims 1 to 3, characterized in that said additive further comprises carboxymethylcellulose.

5. Milk powder according to Claim 4, characterized in that said additive comprises about 40 to 60 % by weight of carboxymethylcellulose.

6. Milk powder according to any one of Claims 1 to 5, characterized in that said additive comprises about 40 % by weight of citric acid, about 40 % by weight of carboxymethylcellulose and about 20 % by weight of an alkaline hexametaphosphate.

7. Milk powder according to any one of Claims 1 to 6, characterized in that said alkaline hexametaphosphate is sodium hexametaphosphate.

## Patentansprüche

1. Milchpulver, insbesondere für Tierfutter, dadurch gekennzeichnet, daß es über die Nahrungsmittelelemente hinaus von 0,8 bis 2 Gew.-% eines Zusatzes enthält, einer Mischung, die sich aus ungefähr 40 bis 85 Gew.-% Zitronensäure und ungefähr 15 bis 60 Gew.-% von alkalischem Hexametaphosphat zusammensetzt.

2. Milchpulver nach Anspruch 1, gekennzeichnet durch 1 bis 1,5 Gew.-% des genannten Zusatzes.

3. Milchpulver nach Anspruch 1, dadurch gekennzeichnet, daß der Zusatz ungefähr 70 Gew.-% Zitronensäure und ungefähr 30 Gew.-% alkalisches Hexametaphosphat aufweist.

4. Milchpulver nach einem der Ansprüche 1 bis 3, dadurch gekennzeichnet, daß der Zusatz darüberhinaus Carboxymethylcellulose aufweist.

5. Milchpulver nach Anspruch 4, dadurch gekennzeichnet, daß der Zusatz ungefähr 40 bis 60 Gew.-% Carboxymethylcellulose aufweist.

6. Milchpulver nach einem der Ansprüche 1 bis 5, dadurch gekennzeichnet, daß der Zusatz ungefähr 40 Gew.-% Zitronensäure, ungefähr 40 Gew.-% Carboxymethylcellulose und ungefähr 20 Gew.-% alkalisches Hexametaphosphat enthält.

7. Milchpulver nach einem der Ansprüche 1 bis 6, dadurch gekennzeichnet, daß das genannte Hexametaphosphat Natriumhexametaphosphat ist.